# EUROPEAN PATENT APPLICATION

(11) **EP 4 113 377 A1**
(43) Date of publication of application: **04.01.2023**
(21) Application number: 22180548.4
(22) Date of filing: 22.06.2022
(51) Int. Cl.: G06K 9/62, G06V 20/56

(54) **USE OF DBSCAN FOR LANE DETECTION**

(30) Priority: 29.06.2021 US 202117362209
(71) Applicant: New Eagle LLC, Ann Arbor MI 48108 (US)
(72) Inventor: MANSOUR, Iyad Faisal Ghazi, Auburn Hills, MI 48326 (US); UMAT, Akhil, Auburn Hills, MI 48326 (US)
(74) Representative: Neumann Müller Oberwalleney Patentanwälte PartG mbB

(57) **Abstract**

A system and method of lane detection using density based spatial clustering of applications with noise (DBSCAN) includes capturing an input image with one or more optical sensors disposed on a motor vehicle. The method further includes passing the input image through a heterogeneous convolutional neural network (HCNN). The HCNN generates an HCNN output. The method further includes processing the HCNN output with DBSCAN to selectively classify outlier data points and clustered data points in the HCNN output. The method further includes generating a DBSCAN output selectively defining the clustered data points as predicted lane lines within the input image. The method further includes marking the input image by overlaying the predicted lane lines on the input image.

## Description

### FIELD

The present disclosure is directed to a system and method of using neural networks to predict the types of various lane lines on a road surface.

### BRIEF DESCRIPTION

The statements in this section merely provide background information related to the present disclosure and may or may not constitute prior art.

Vehicle technologies such as free-ranging on grid navigation, as well as parking guidance and information systems, aid in the prevention of human error when drivers operate a vehicle. Such technologies have been used to improve navigation of roadways, and to augment the parking abilities of vehicle drivers while the drivers are present within the vehicle. For example, on-board detection systems and impact alert systems have been developed that assist the operator of the vehicle while maneuvering to avoid collisions. Typical on-board detection systems utilize machine vision for determining or predicting the surroundings of the vehicle. The detection systems often rely upon cameras, and/or other optical sensors to predict lane lines, lane types, and in order to aid autonomous driving systems of the vehicle. More specifically, the detection systems provide data for autonomous driving systems and advanced driver assistance systems (ADAS) to autonomously detect and avoid or assist a motor vehicle operator in detecting and avoiding obstacles and avoiding collisions while driving. Some autonomous driving systems have even been adapted to autonomously park the vehicle in a parking spot once the operator of the vehicle has positioned the vehicle in a predefined location proximate the parking spot.

While these systems and methods are useful for their intended purpose, typical detection systems are subject to optical interference caused by weather, debris, and the like. Accordingly, there is a need in the art for new and improved vehicle technologies that are robust in predicting lane lines, and lane line locations.

### SUMMARY

According to several aspects of the present disclosure, a method of lane detection using density based spatial clustering of applications with noise (DBSCAN) includes capturing an input image with one or more optical sensors disposed on a motor vehicle. The method further includes passing the input image through a heterogeneous convolutional neural network (HCNN). The HCNN generates an HCNN output. The method further includes processing the HCNN output with DBSCAN to selectively classify outlier data points and clustered data points in the HCNN output. The method further includes generating a DBSCAN output selectively defining the clustered data points as predicted lane lines within the input image. The method further includes marking the input image by overlaying the predicted lane lines on the input image.

In another aspect of the present disclosure capturing an input image further includes utilizing a plurality of cameras disposed on the motor vehicle to capture the input image. The plurality of cameras have a field of view extending for a predetermined distance in front of the motor vehicle and extending for at least 180° from a left side of the motor vehicle to a right side of the motor vehicle.

In yet another aspect of the present disclosure passing the input image through an HCNN further includes directly receiving the input image in a feature extraction layer (FEL) portion of the HCNN. The HCNN has multiple convolution, pooling, and activation layers stacked together with one another. The method further includes analyzing the input image within the FEL portion with an algorithm that includes a thresholding algorithm portion and a transformation algorithm portion.

In still another aspect of the present disclosure analyzing the input image within the FEL portion further includes assigning different colors to data points associated with predicted lane lines within the input image, and clustering outputs of the FEL portion to identify clustered data points and marking the predicted lane lines.

In yet another aspect of the present disclosure analyzing the input image within the FEL portion further includes receiving within the FEL portion, a full-size input image, and cropping the full-size image to a predetermined size.

In still another aspect of the present disclosure the thresholding algorithm portion further includes utilizing Canny edge detection to generate, with the FEL portion, a binary image including edges detected within the input image. The binary image accurately captures as many edges in the image as possible. The edges detected accurately localizes on a center of each edge; and wherein each edge in the image is marked within the image only once.

In yet another aspect of the present disclosure the transformation algorithm portion further includes utilizing a Hough transformation to calculate, with the FEL portion, end points of line segments detected within the input image. The line segments define at least portions of possible lane lines within the input image.

In still another aspect of the present disclosure processing the input image through an HCNN further includes detecting and predicting lane line locations in the input image, wherein predicted lane line locations are defined by clustered data points.

In yet another aspect of the present disclosure generating a DBSCAN output further includes determining whether a distance between data points is smaller than a threshold distance, and determining whether a density of data points is above a threshold density. The density of data points is a quantity of data points within a predetermined radius distance. When the distance is smaller than the threshold distance and the density of data points is above the threshold density, the method defines the data points as predicted lane lines. When the distance is greater than the threshold distance or the density data points is below the threshold density, the method defines the data points as outlier data points.

In still another aspect of the present disclosure marking the input image further includes overlaying clusters of data points having a distance between data points smaller than the threshold distance and having a density above the threshold density onto the input image. Marking the input image further includes color-coding the clusters of data points so that each predicted lane line marked on the input image is assigned a different color from the other predicted lane lines.

In yet another aspect of the present disclosure a system for lane detection using density based spatial clustering of applications with noise (DBSCAN) includes one or more optical sensors. The one or more optical sensors are disposed on a motor vehicle, the one or more optical sensors capturing an input image. The system further includes a control module having a processor, a memory, and input/output ports, the input/output ports in electronic communication with the one or more optical sensors and receiving the input image, the memory storing computer executable control logic portions, the computer executable control logic portions including a heterogeneous convolutional neural network (HCNN). The control module executes a first control logic portion for passing the input image through the HCNN. The HCNN generates an HCNN output. The control module executes a second control logic portion for processing the HCNN output with DBSCAN and selectively classifying outlier data points and clustered data points in the HCNN output. The second control logic portion detects and predicts lane line locations in the input image. Predicted lane line locations are defined by clustered data points. The control module executes a third control logic portion for generating a DBSCAN output, the DBSCAN output selectively defining the clustered data points as predicted lane lines within the input image. The control module executes a fourth control logic portion for marking the input image by overlaying the predicted lane lines on the input image.

In still another aspect of the present disclosure the one or more optical sensors are a plurality of cameras disposed on the motor vehicle. The plurality of cameras have a field of view extending for a predetermined distance in front of the motor vehicle and extending for at least 180° from a left side of the motor vehicle to a right side of the motor vehicle.

In yet another aspect of the present disclosure the first control logic portion further includes computer executable program code for directly receiving the input image in a feature extraction layer (FEL) portion of the HCNN, the HCNN having multiple convolution, pooling, and activation layers stacked together with one another. The first control logic portion also analyzes the input image within the FEL portion with an algorithm including a thresholding algorithm portion and a transformation algorithm portion.

In still another aspect of the present disclosure the computer executable program code for analyzing the input image within the FEL portion further includes logic for assigning different colors to data points associated with predicted lane lines within the input image and clustering outputs of the FEL portion to identify clustered data points and marking the predicted lane lines.

In yet another aspect of the present disclosure the computer executable program code for analyzing the input image within the FEL portion further includes logic for receiving within the FEL portion, a full-size input image and cropping the full-size image to a predetermined size.

In still another aspect of the present disclosure the thresholding algorithm portion further includes computer executable program code for utilizing Canny edge detection to generate, with the FEL portion, a binary image including edges detected within the input image. The binary image accurately captures as many edges in the image as possible; the edges detected accurately localizes on a center of each edge; and wherein each edge in the image is marked within the image only once.

In yet another aspect of the present disclosure the transformation algorithm portion further includes computer executable program code for utilizing a Hough transformation to calculate, with the FEL portion, end points of line segments detected within the input image. The line segments define at least portions of possible lane lines within the input image.

In still another aspect of the present disclosure the third control logic portion further includes computer executable program code for determining whether a distance between data points is smaller than a threshold distance. The third control logic portion further determines whether a density of data points is above a threshold density. The density of data points is a quantity of data points within a predetermined radius distance. When the distance is smaller than the threshold distance and the density of data points is above the threshold density, the third control logic defines the data points as predicted lane lines, and when the distance is greater than the threshold distance or the density data points is below the threshold density, the third control logic defines the data points as outlier data points.

In yet another aspect of the present disclosure the fourth control logic portion further includes computer executable program code for overlaying clusters of data points having a distance between data points smaller than the threshold distance and having a density above the threshold density onto the input image. The fourth control logic further color-codes the clusters of data points so that each predicted lane line marked on the input image is assigned a different color from the other predicted lane lines.

In still another aspect of the present disclosure a method of lane detection using density based spatial clustering of applications with noise (DBSCAN) includes capturing an input image with a plurality of cameras disposed on a motor vehicle, the plurality of cameras having a field of view extending for a predetermined distance in front of the motor vehicle and extending for at least 180° from a left side of the motor vehicle to a right side of the motor vehicle. The method further includes passing the input image through a heterogeneous convolutional neural network (HCNN). The HCNN generates an HCNN output by directly receiving a full-size input image in a feature extraction layer (FEL) portion of the HCNN, the HCNN having multiple convolution, pooling, and activation layers stacked together with one another; and generates a cropped image by cropping the full-size input image to a predetermined size, the predetermined size including a portion of the full-size input image including a road surface. The method further includes analyzing the cropped image within the FEL portion with an algorithm comprising a thresholding algorithm portion and a transformation algorithm portion. The thresholding algorithm portion utilizing Canny edge detection to generate, with the FEL portion, a binary image including edges detected within the cropped image. The binary image accurately captures as many edges in the cropped image as possible; the edges detected accurately localizing on a center of each edge; and wherein each edge in the image is marked within the cropped image only once. The transformation algorithm portion utilizes a Hough transformation to calculate, with the FEL portion, end points of line segments detected within the cropped image, wherein the line segments define at least portions of possible lane lines within the cropped image. The method further includes assigning different colors to data points associated with predicted lane lines within the cropped image, and clustering outputs of the FEL portion to identify clustered data points and marking the predicted lane lines. The method further includes processing the HCNN output with DBSCAN to selectively classify outlier data points and clustered data points in the HCNN output. DBSCAN detects and predicts lane line locations in the input image, such that predicted lane line locations are defined by clustered data points. The method further includes determining whether a distance between data points is smaller than a threshold distance, and determining whether a density of data points is above a threshold density. The density of data points is a quantity of data points within a predetermined radius distance of a data point. When the distance is smaller than the threshold distance and the density of data points is above the threshold density, the method defines the data points as predicted lane lines, and when the distance is greater than the threshold distance or the density data points is below the threshold density, the method defines the data points as outlier data points. The method further includes color-coding the clusters of data points so that each predicted lane line marked on the input image is assigned a different color from the other predicted lane lines. The method further includes generating a DBSCAN output selectively defining the clustered data points as predicted lane lines within the full-size input image, and marking the full-size input image by overlaying clusters of data points defining predicted lane lines on the full-size input image.

Further areas of applicability will become apparent from the description provided herein. It should be understood that the description and specific examples are intended for purposes of illustration only and are not intended to limit the scope of the present disclosure.

### DRAWINGS

The drawings described herein are for illustration purposes only and are not intended to limit the scope of the present disclosure in any way.
FIG. 1 is a schematic illustration of a vehicle utilizing Density-Based Spatial Clustering of Applications with Noise (DBSCAN) to predict lane line locations proximate to the vehicle according to an embodiment of the present disclosure;
FIG. 2 is a schematic illustration of a series of procedural steps for predicting lane line locations according to an embodiment of the present dislosure; and
FIG. 3 is a flow chart of a method for predicting lane line locations utilizing DBSCAN according to an embodiment of the present disclosure.

### DETAILED DESCRIPTION

The following description is merely exemplary in nature and is not intended to limit the present disclosure, application or uses.

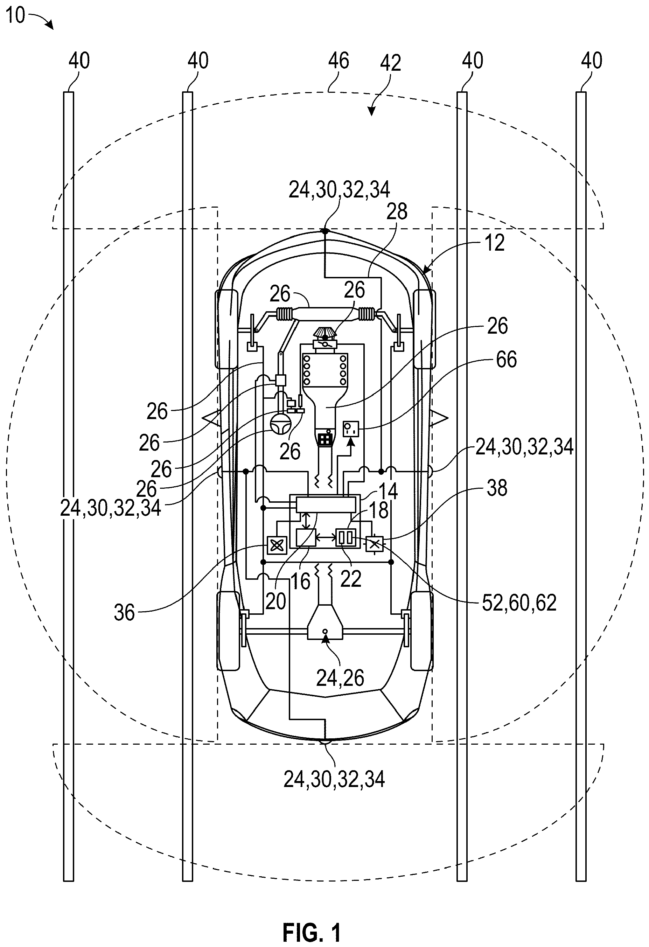

With reference to FIG. 1, a system 10 for using DBSCAN to perform lane detection is shown. In an example, the system 10 operates on a vehicle 12. The vehicle 12 is illustrated as a passenger vehicle, however the vehicle 12 may be a truck, sport utility vehicle, van, motor home, or any other type of road vehicle, water vehicle, or air vehicle without departing from the scope or intent of the present disclosure.

The vehicle 12 is equipped with one or more control modules 14. Each control module 14 is a non-generalized electronic control device having a preprogrammed digital computer or processor 16, non-transitory computer readable medium or memory 18 used to store data such as control logic, instructions, image data, lookup tables, and the like, and a plurality of input/output (I/O) peripherals or ports 20. The processor 16 is configured to execute the control logic or instructions. The control logic or instructions include any type of computer executable program code, including source code, object code, and executable code. The control logic also includes software programs such as algorithms 22 configured to perform a specific function or set of functions. The control logic may include one or more computer programs, software components, sets of instructions, procedures, functions, objects, classes, instances, related data, or a portion thereof adapted for implementation in a suitable computer readable program code. The control logic may be stored within the memory 18 of the control module 14 or in additional or separate memory 18.

The control modules 14 may have additional processors 16, or additional integrated circuits in communication with the processors 16, such as perception logic circuits for analyzing visual data, or dedicated vehicle-to-vehicle (V2V) or vehicle-to-infrastructure (V21) circuits. Alternatively, the functions of the control module 14 may be distributed across a variety of sub-systems. The memory 18 includes media where data can be permanently stored and/or media where data can be stored and later overwritten, such as a rewritable optical disc or erasable memory device. In further examples, the memory 18 may include any of a variety of different storage media, such as flash memory, an embedded multimedia (EMMC) flash memory, random access memory (RAM), or the like. The I/O ports 20 receive input data from one or more sensors 24 and actuators 26 of the vehicle 12.

In several aspects, the sensors 24 include an optical sensing system 28 having optical and/or electromagnetic sensors such as cameras 30, ultrasonic sensors, light detection and ranging (LiDAR) units 32, and radio detection and ranging (RADAR) units 34. The sensors 24 of the optical sensing system 28 are shown in four distinct locations on the vehicle 12 of FIG. 1, however, it should be appreciated that the sensors 24 may be located at any of a variety of other locations on or off the vehicle 12 without departing from the scope or intent of the present disclosure. In a specific example, shown in FIG. 1, the optical sensing system 28 utilizes a plurality of cameras 30. The sensors 24 may also include movement sensors such as gyroscopic sensors 36, accelerometers 38, and the like. The actuators 26 should be understood to include any of a variety of electronic, hydraulic, thermal, combustion, mechanical, friction, and/or pneumatic devices capable of altering the movement of the vehicle 12.

The control module 14 communicates electronically, pneumatically, hydraulically, or the like with a variety of on-board systems having the above-described sensors 24 and actuators 26. In several aspects, the system 10 recognizes road markings, such as lane lines 40. To train the system 10 to perform such recognition tasks, the vehicle 12 is driven along a road surface 42. As the vehicle 12 is driven, the optical sensing system 28 captures input images 44 of the road surface 42 proximate the vehicle 12. More specifically, the input images 44 captured by cameras 30 of the optical sensing system 28 may include still images, video, any combination of the two, or the like. The input images 44 include a predefined area around the vehicle 12. In an example, at least one forward-facing camera 30 disposed on the vehicle 12 captures optical information in the form of video and/or still images in a predetermined field of view 46 in front of the vehicle 12. The predetermined field of view 46 may vary in size and shape depending on the application. In one example, the predetermined field of view 46 extends for a radius or distance in front of the vehicle 12 and for an arc extending for about 180°.

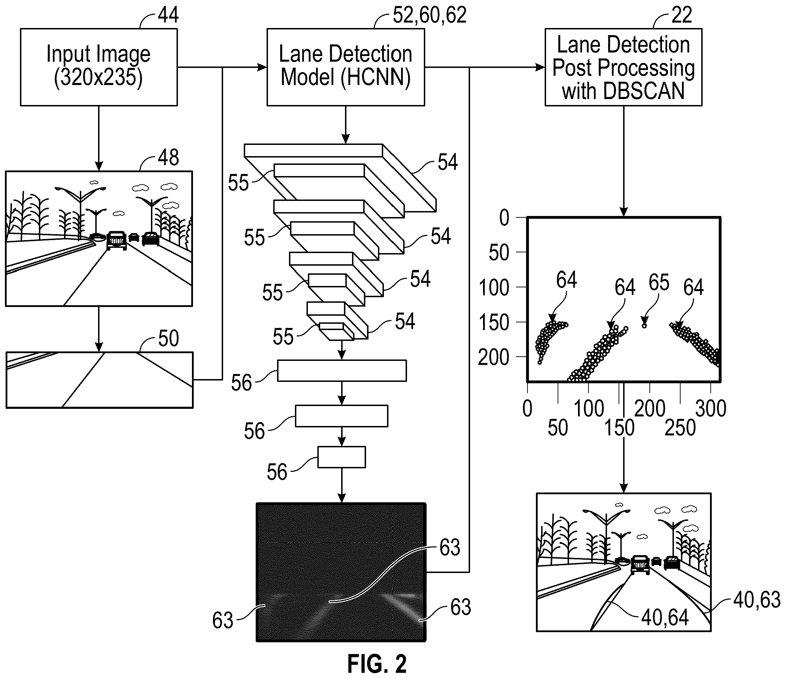

Turning now to FIG. 2, and with continuing reference to FIG. 1, the input image 44 is reduced in size to improve efficiency of the control module 14 and reduce the quantity and complexity of calculations required to analyze the input image 44. More specifically, the input images 44 define a full-size images 48, or a plurality of full-size images 48. The cameras 30, or more precisely, the optical sensing system 28 sends the full-size images 48 to the processor 16 of the control module 14 via the I/O ports 20, where the processor 16 executes programmatic control logic stored in the memory 18 that reduces a size of the optical information in the full-size images 48 by retaining only a portion of the full-size images 48 in memory 18. Specifically, the full-size images 48 are cropped to a predetermined size to increase analytic efficiency. In an example, the full-size images 48 are about 320 pixels wide by 235 pixels high, and the cropped images 50 are 320 pixels wide by 110 pixels high. It should be appreciated, however, that the precise size and shape of both the full-size images 48 and the cropped images 50 are selected to ensure that the portion of optical information that is retained in memory 18 includes the road surface 42 proximate to the vehicle 12.

The cropped images 50 are subsequently analyzed to detect and annotate lane lines 40 using a Density-Based Spatial Clustering of Applications with Noise (DBSCAN) algorithm 22. DBSCAN algorithms 22 are data-clustering algorithms used for machine learning. DBSCAN algorithms 22 group together sets of data points that are close to one another based on a distance measurement and a minimum number of points. In the process, the DBSCAN algorithm 22 marks low density regions as outlier points. The DBSCAN algorithm 22 makes use of two major parameters referred to herein ε or "eps" and "minpoints". If a distance between two data points is less than or equal to "eps", the data points are considered neighbors. "Minpoints", on the other hand, is the number of data points required with a radius equal to "eps" to make a dense region or cluster 64. Combined, "eps" and "Minpoints" must be tuned properly based on a given application. It should be appreciated that small values of "eps" will lead to a large part of a given data set not being clustered, and instead being rejected as outlier 65 points. Conversely, when large values of "eps" are used, outliers 65 are more likely to be included in the clusters 64. That is, the smaller the value of "eps", the larger the quantity of data in a given data set that will be rejected as outlier 65 data points, and the larger the value of "eps", the smaller the quantity of data in a given data set that will be rejected as outliers 65.

If a quantity of noise in a given data set is high, the value of "minpoints" will similarly be high, leading to the creation of significant clusters 64. Conversely, when a low value of "minpoints" is used, there is a higher chance that outlier data will be included in the clusters 64. Broadly speaking, systems 10 utilizing DBSCAN algorithms 22 are capable of distinguishing noise from "good" data. In several aspects, the DBSCAN algorithm 22 visits each point of data in a data set, possibly multiple times (e.g. as candidates for different data clusters 64). In order to reduce computational resources required by the DBSCAN algorithm 22, a time limitation is imposed. The time limitation may vary from application to application based on a variety of factors, including available computational resources, complexity of the input image 44, and the like.

More specifically, the DBSCAN algorithm 22 is applied after the cropped image 50 is passed through a heterogenous convolutional neural network (HCNN) 52. The HCNN 52 carries out a series of calculations and manipulations that assess the optical information in the cropped image 50 and detect locations of a plurality of lane lines 40 within the optical information. The HCNN 52 includes a plurality of convolution and activation layers 54, pooling layers 55, and fully connected layers 56. The convolution and activation layers 54 may also be described as exponential linear units (ELUs). ELUs speed up learning in deep learning neural networks relative to rectified linear units (RleLUs), leaky ReLUs (LReLUs), and parameterized ReLUs (PReLUs), and the like. That is, ELUs have improved learning characteristics, and alleviate vanishing gradient issues. Furthermore, ELUs have increased classification accuracies over other known algorithms 22. In each subsequent convolution and activation layer 54, the cropped image 50 is repeatedly reduced in size by filtering the optical information from each of the convolution and activation layers 54 and subsequently pooling the optical information in subsequent pooling layers 55 after each size reduction. Once the cropped image 50 has passed through all of the convolution and activation 54 and pooling layers 55, the cropped image 50 is passed through fully connected layers 56.

In the fully connected layers 56, the control module 14 predicts a plurality of values assigned to predetermined object characteristics. More specifically, in each of the fully connected layers 56, the cropped optical information is analyzed and a plurality of features within the cropped image 50 are mapped to the values assigned to the predetermined object characteristics. As the control module 14 analyzes the optical information in the cropped image 50, the control module 14 characterizes color variations within the cropped image 50. The control module 14, for example, identifies color and/or optical intensity variations within the cropped image 50 and characterizes the color and/or optical intensity variations as objects within the input image 44. It should be appreciated that while four convolution and activation layers 54, four pooling layers 55, and three fully connected layers 56 are shown in FIG. 2, the precise quantity of each may vary depending on the system 10 architecture and processing requirements. Accordingly, variations in quantity of convolution and activation layers, pooling layers 55, and fully connected layers 56 should be understood to be within the scope and intent of the present disclosure.

In an example, the HCNN 52 directly receives the full-size images 48 in a feature extraction layer (FEL) portion 58 of the HCNN 52. The FEL portion 58, contains the convolution and activation layers 54, the pooling layers 55, and the fully connected layers 56. The FEL portion 58 carries out a variety of operations that refine the optical information of the cropped image 50 into usable data. The system utilizes the FEL portion 58 to execute a thresholding algorithm portion 60 and a transformation algorithm portion 62. The thresholding algorithm portion 60 generates a binary image from the cropped image 50 data. That is, the thresholding algorithm portion 60 distinguishes data of interest from data that is likely to be extraneous. In an example, the thresholding algorithm portion 60 is a Canny edge detection algorithm 60. Canny edge detection algorithms 60 are multi-stage algorithms 22 that detect a wide range of edges in images. Specifically, the Canny edge detection algorithms 60 first applies a Gaussian filter to smooth the image and remove noise from the image. Then the Canny edge detection algorithm 60 finds intensity gradients in the image. The Canny edge detection algorithm 60 then applies gradient magnitude thresholding or lower bound cut-off suppression to remove spurious response to the edge detection. The Canny edge detection algorithm 60 then applies a double threshold to determine possible edges. Finally, the Canny edge detection algorithm 60 performs hysteresis to finalize the detection of edges in the image by suppressing all other edges that are weak and not connected to strong edges.

The system 10 then uses the FEL portion 58 to execute the transformation algorithm portion 62. In generalized terms, the transformation algorithm portion 62 determines end points to line segments detected by the Canny edge detection algorithm 60. In a particular example, the transformation algorithm portion 62 is a Hough transform algorithm 62. Hough transform algorithms 62 are feature extraction algorithms 22 used in image analysis, computer vision, and digital image processing. A Hough transform algorithm 62 finds imperfect instances of objects within certain classes of shapes through a voting procedure. The Hough transform algorithm 62 typically detects simple shapes, such as straight lines, circles, ellipses, and the like. In a particular example, the Hough transform algorithm 62 utilizes the output of the Canny edge detection algorithm 60 to calculate end points of line segments detected by in the input image 44. The line segments define at least portions of possible lane lines 40 within the input image 44. The system 10, through the FEL portion 58, utilizes the outputs of the thresholding and transformation algorithm portions 60, 62 to define predicted lane lines 63 within the input image 44. Each of the predicted or possible lane lines 40 is assigned a distinct, different color from other predicted lane lines 63 within the input image 44. The outputs of the HCNN 52, and specifically of the thresholding and transformation algorithm portions 60, 62, define a plurality of data points represented as dots, blobs, or the like.

The system 10 utilizes the DBSCAN algorithm 22 to process the dots, blobs, or other such data point representations to selectively classify outlier data points 65 and clustered data points 64 in the input image 44. Specifically, the DBSCAN algorithm 22 determines whether a distance between adjacent data points is smaller than a threshold distance. The DBSCAN algorithm 22 also determines a density of data points in the input image 44. The density of data points is a quantity of data points within a predetermined radius distance of a given data point. When the distance between data points is smaller than the threshold distance, and the density of data points is above a threshold density, the DBSCAN algorithm 22 flags the data points as "good" data and clusters the data points. Clustered data points 64 are color-coded and each defined cluster of data is assigned a different color in the input image 44 such that each predicted or possible lane line 40 within the input image 44 is assigned a different color.

Conversely, when the distance between data points is greater than the threshold distance and/or the density of the data points is below the threshold density value, the DBSCAN algorithm 22 classifies the data points as outlier or "noise" data points 65, rather than clustered "good" data points 64. Outlier data points 65 are not taken into consideration as possible lane line 40 markings on the road surface 42.

The system 10 utilizes the outputs of the DBSCAN algorithm 22 to mark the input image 44. More specifically, the system 10 overlays the color-coded clusters 64 of data points onto the input image 44. The overlaid clusters 64 of color-coded data points mark predicted lane lines 63 in the input image 44.

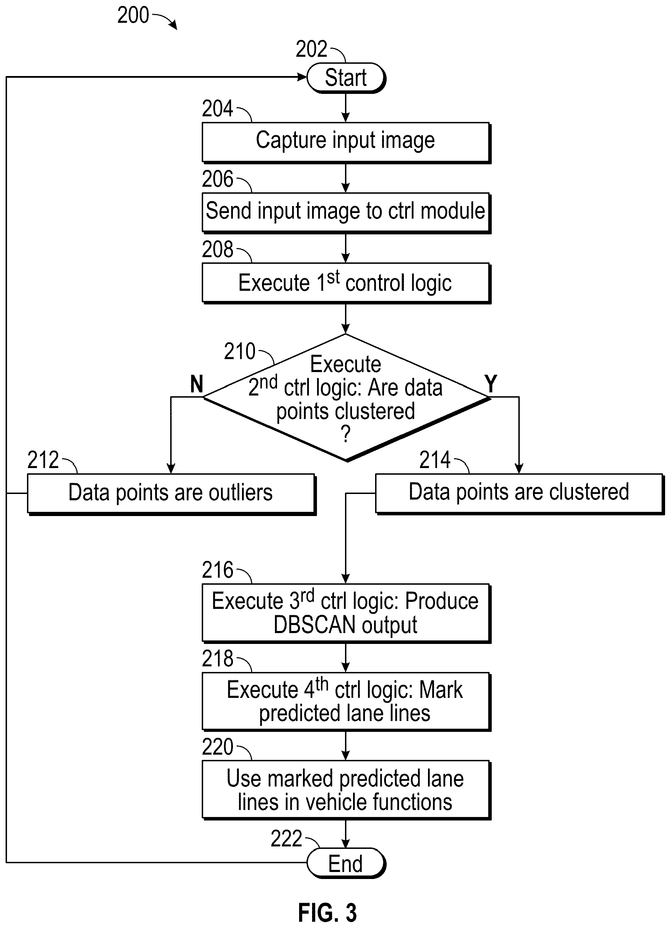

Turning now to FIG. 3, and with continuing reference to FIGS. 1-2, a method 200 for lane detection using DBSCAN is shown. The method 200 begins at block 202. At block 204 one or more sensors 24, such as cameras 30, of an optical sensing system 28 disposed on the motor vehicle 12 capture an input image 44. At block 206, the input image 44 is electronically communicated, via the I/O ports 20 to the processor 16 of the control module 14. The control module 14 also has a memory 18 that stores computer executable control logic portions including the HCNN 52 and DBSCAN algorithms 22. At block 208, the control module 14 executes a first control logic portion for passing the input image 44 through the HCNN 52. Specifically, the first control logic portion executes portion 60 and a transformation algorithm portion 62. The thresholding algorithm portion 60 detects edges in the input image 44, while the transformation algorithm portion 62 determines the end points of line segments detected through use of the thresholding algorithm portion 60.

At block 210, the control module 14 executes a second control logic portion for processing the HCNN output with the DBSCAN algorithm 22. The DBSCAN algorithm 22 selectively classifies outlier data points 65 and clustered data points 64 in the HCNN output. That is, at block 210, when the data points are below a threshold distance from one another and above a threshold density, the data points are classified as clustered data points 64, and when the data points are above the threshold distance and/or below a threshold density, the data points are classified as outlier data points 65. If the data points are classified as outliers, the method 200 proceeds to block 212, where the outlier data points 65 are removed from further calculations. The method 200 subsequently proceeds from block 212 back to block 202 where additional input images 44 are processed. However, when the data points are classified as clustered data points 64, the method proceeds to block 214. From block 214 the control module 14 executes a third control logic portion at block 216 which produces a DBSCAN algorithm 22 output. The DBSCAN algorithm 22 further classifies the clustered data points 64 as predicted lane line 63 locations within the input image 44.

At block 218, the control module 14 executes a fourth control logic portion that marks the input image 44 by overlaying predicted lane lines 63 on the input image 44. The clustered data points 64 are color-coded so that each cluster of data marked on the input image 44 is optically distinct and distinguishable from other predicted lane lines 63 in the input image 44. At block 220, the marked predicted lane lines 63 are utilized by onboard systems of the vehicle 12 to adjust driving functions of the vehicle 12. In an example, the marked predicted lane lines 63 are displayed to a motor vehicle operator via an in-vehicle display 66 such as a screen within the instrument cluster, within the center control stack, within a heads-up display, or the like. Accordingly, the marked predicted lane lines 63 may be used to assist the motor vehicle operator in determining the locations of lane lines 40 on a road surface 42 proximate the motor vehicle 12. Similarly, the marked predicted lane lines 63 may be used as an input to advanced driver assistance systems (ADAS) equipped to the motor vehicle 12, thereby aiding the motor vehicle 12 in maintaining lane positioning, directionality, and the like. At block 222, the method ends and returns to block 202 where the method 200 runs again. The method 200 may run continuously, periodically, or the like, depending on requirements of on-board ADAS systems and the like.

A system and method for lane detection using DBSCAN offers several advantages. These include the ability to utilize preexisting infrastructure to perform image analyses that overcome optical interference caused by weather, debris, and the like. Moreover, the system and method of the present disclosure can mimic and improve upon a human driver's ability to determine the positions and types of lane lines 40 on a road surface 42. The system and method further provide robust predictions of both lane lines 40 and lane types even when the road surface 42 is obscured by weather, debris, and the like.

The description of the present disclosure is merely exemplary in nature and variations that do not depart form the gist of the present disclosure are intended to be within the scope of the present disclosure. Such variations are not to be regarded as a departure from the spirit and scope of the present disclosure.

## Claims

1. A method of lane detection using density based spatial clustering of applications with noise (DBSCAN), the method comprising:
capturing an input image with one or more optical sensors disposed on a motor vehicle;
passing the input image through a heterogeneous convolutional neural network (HCNN), the HCNNgenerating an HCNN output;
processing the HCNN output with DBSCAN to selectively classify outlier data points and clustered data points in the HCNN output;
generating a DBSCAN output selectively defining the clustered data points as predicted lane lines within the input image; and
marking the input image by overlaying the predicted lane lines on the input image.

2. The method of claim 1 wherein capturing an input image further comprises: utilizing a plurality of cameras disposed on the motor vehicle to capture the input image, the plurality of cameras having a field of view extending for a predetermined distance in front of the motor vehicle and extending for at least 180° from a left side of the motor vehicle to a right side of the motor vehicle.

3. The method of claim 1 wherein passing the input image through an HCNN further comprises:
directly receiving the input image in a feature extraction layer (FEL) portion of the HCNN, the HCNN having multiple convolution, pooling, and activation layers stacked together with one another;
analyzing the input image within the FEL portion with an algorithm comprising:
a thresholding algorithm portion; and
a transformation algorithm portion.

4. The method of claim 3 wherein analyzing the input image within the FEL portion further comprises:
assigning different colors to data points associated with predicted lane lines within the input image; and
clustering outputs of the FEL portion to identify clustered data points and marking the predicted lane lines.

5. The method of claim 3 wherein analyzing the input image within the FEL portion further comprises:
receiving within the FEL portion, a full-size input image; and
cropping the full-size image to a predetermined size.

6. The method of claim 3 wherein the thresholding algorithm portion further comprises:
utilizing Canny edge detection to generate, with the FEL portion, a binary image including edges detected within the input image, wherein the binary image accurately captures as many edges in the image as possible; the edges detected accurately localizing on a center of each edge; and wherein each edge in the image is marked within the image only once.

7. The method of claim 3 wherein the transformation algorithm portion further comprises:
utilizing a Hough transformation to calculate, with the FEL portion, end points of line segments detected within the input image, wherein the line segments define at least portions of possible lane lines within the input image.

8. The method of claim 1 wherein processing the input image through an HCNN further comprises:
detecting and predicting lane line locations in the input image, wherein predicted lane line locations are defined by clustered data points.

9. The method of claim 8 wherein generating a DBSCAN output further comprises:
determining whether a distance between data points is smaller than a threshold distance;
determining whether a density of data points is above a threshold density, wherein the density of data points is a quantity of data points within a predetermined radius distance; and
when the distance is smaller than the threshold distance and the density of data points is above the threshold density, defining the data points as predicted lane lines, and when the distance is greater than the threshold distance or the density data points is below the threshold density, defining the data points as outlier data points.

10. The method of claim 9 wherein marking the input image further comprises:
overlaying clusters of data points having a distance between data points smaller than the threshold distance and having a density above the threshold density onto the input image; and
color-coding the clusters of data points so that each predicted lane line marked on the input image is assigned a different color from the other predicted lane lines.

11. A system for lane detection using density based spatial clustering of applications with noise (DBSCAN), the system comprising:
one or more optical sensors, the one or more optical sensors disposed on a motor vehicle, the one or more optical sensors capturing an input image;
a control module having a processor, a memory, and input/output ports, the input/output ports in electronic communication with the one or more optical sensors and receiving the input image, the memory storing computer executable control logic portions, the computer executable control logic portions including a heterogeneous convolutional neural network (HCNN);
the control module executing a first control logic portion for passing the input image through the HCNN, the HCNN generating an HCNN output;
the control module executing a second control logic portion for processing the HCNN output with DBSCAN and selectively classifying outlier data points and clustered data points in the HCNN output, the second control logic portion detecting and predicting lane line locations in the input image, wherein predicted lane line locations are defined by clustered data points;
the control module executing a third control logic portion for generating a DBSCAN output, the DBSCAN output selectively defining the clustered data points as predicted lane lines within the input image; and
the control module executing a fourth control logic portion for marking the input image by overlaying the predicted lane lines on the input image.

12. The system of claim 11 wherein the one or more optical sensors are a plurality of cameras disposed on the motor vehicle, the plurality of cameras have a field of view extending for a predetermined distance in front of the motor vehicle and extending for at least 180° from a left side of the motor vehicle to a right side of the motor vehicle,
wherein the first control logic portion further comprises computer executable program code for:
directly receiving the input image in a feature extraction layer (FEL) portion of the HCNN, the HCNN having multiple convolution, pooling, and activation layers stacked together with one another;
analyzing the input image within the FEL portion with an algorithm comprising:
a thresholding algorithm portion; and
a transformation algorithm portion.

13. The system of claim 12 wherein the computer executable program code for analyzing the input image within the FEL portion further comprises:
assigning different colors to data points associated with predicted lane lines within the input image; and
clustering outputs of the FEL portion to identify clustered data points and marking the predicted lane lines,
wherein the computer executable program code for analyzing the input image within the FEL portion further comprises:
receiving within the FEL portion, a full-size input image; and
cropping the full-size image to a predetermined size,
wherein the thresholding algorithm portion further comprises:
computer executable program code for utilizing Canny edge detection to generate, with the FEL portion, a binary image including edges detected within the input image, wherein the binary image accurately captures as many edges in the image as possible; the edges detected accurately localizing on a center of each edge; and wherein each edge in the image is marked within the image only once.

14. The system of claim 12 wherein the transformation algorithm portion further comprises:
computer executable program code for utilizing a Hough transformation to calculate, with the FEL portion, end points of line segments detected within the input image, wherein the line segments define at least portions of possible lane lines within the input image.

15. The system of claim 11 wherein the third control logic portion further comprises computer executable program code for:
determining whether a distance between data points is smaller than a threshold distance;
determining whether a density of data points is above a threshold density,
wherein the density of data points is a quantity of data points within a predetermined radius distance; and
when the distance is smaller than the threshold distance and the density of data points is above the threshold density, defining the data points as predicted lane lines, and when the distance is greater than the threshold distance or the density data points is below the threshold density, defining the data points as outlier data points,
wherein the fourth control logic portion further comprises computer executable program code for:
overlaying clusters of data points having a distance between data points smaller than the threshold distance and having a density above the threshold density onto the input image; and
color-coding the clusters of data points so that each predicted lane line marked on the input image is assigned a different color from the other predicted lane lines.
